# EUROPEAN PATENT APPLICATION

(11) **EP 2 432 248 A2**
(43) Date of publication of application: **21.03.2012**
(21) Application number: 11177138.2
(22) Date of filing: 10.08.2011
(51) Int. Cl.: H04R 1/02

(54) **Supporting module and electronic device using the same**

(30) Priority: 21.09.2010 CN 201010288628
(71) Applicant: Protek (Shanghai) Limited, Pudong Kangqiao Industrial Zone Shanghai (CN); Pegatron Corporation, Taipei City 112 (TW)
(72) Inventor: Hung, Shih-Wei, 112 Beitou District, Taipei City (TW); Cheng, Xue-Bing, Shanghai (CN); Lin, Qing-Hong, Shanghai (CN)
(74) Representative: 2K Patentanwälte Blasberg Kewitz & Reichel

(57) **Abstract**

A supporting module and an electronic device using the same are disclosed. The supporting module is disposed between the first body and the second body and includes a guide rail, a sliding element, an elastic element, and a supporting unit. The guide rail is fastened to the first body and has a first side wall and a second side wall facing each other. The first side wall has a plurality of first recessed portions, and the second side wall has a plurality of second recessed portions. The sliding element is slidably disposed at the guide rail along a first direction. The elastic element is disposed at the sliding element and is positioned between the first side wall and the second side wall. Two ends of the supporting unit are rotatably disposed at the sliding element and the second body around a second direction.

## Description

### BACKGROUND OF THE INVENTION

### Field of Invention

This invention relates to a supporting structure and, more particularly, to a supporting module and an electronic device using the same.

### Related Art

Generally, a torque hinge structure is used for assisting in opening or closing an object. However, the conventional torque hinge structure generates a torque mainly relying on interference cooperation or a friction force of an elastic sheet, and therefore the torque hinge structure needs many components. Further, to accurately control the torque, great precision of the dimension is needed, and therefore costs of the components of the torque hinge structure are high.

In addition, stability of the torque hinge structure is poor. Especially, transmission of torque of the torque hinge structure at the location away from the axle centre is poor due to a long rotation moment arm and a small force, thus causing the object to quiver when the object is opened to a certain angle.

### SUMMARY OF THE INVENTION

This invention is to provide a supporting module and an electronic device using the same to improve the prior art.

The invention provides a supporting module disposed between a first body and a second body. The supporting module includes a guide rail, a sliding element, an elastic element, and a supporting unit. The guide rail is fastened to the first body and has a first side wall and a second side wall facing each other. The first side wall has a plurality of first recessed portions, and the second side wall has a plurality of second recessed portions in a one-to-one correspondence with the first recessed portions. Each of the first recessed portions and the corresponding second recessed portion are recessed in opposite directions to allow the guide rail to have different width along a first direction. The sliding element is slidably disposed at the guide rail along the first direction. The elastic element is disposed at the sliding element and is positioned between the first side wall and the second side wall of the guide rail. Two ends of the supporting unit are rotatably disposed at the sliding element and the second body around a second direction vertical with the first direction. When the first body and the second body approaches or are far away from each other along the guide rail, the supporting unit rotates relative to the first body and the second body around the second direction, the sliding element slides in the guide rail along the first direction, and the elastic element is positioned between one of the first recessed portions and the corresponding second recessed portion, thus positioning the first body and the second body.

In one embodiment, the elastic element may be an elastic sheet.

In one embodiment, the supporting unit may include a supporting rod, a first shaft, and a second shaft. The first shaft may be disposed at one end of the supporting rod and may be rotatably disposed at the sliding element around the second direction. The second shaft may be disposed at the other end of the supporting rod and may be rotatably disposed at the second body around the second direction.

In one embodiment, the two ends of the supporting rod may have a thread portion, respectively.

In one embodiment, the supporting module may further include a base fastened to the second body. The supporting unit may be rotatably disposed at the base around the second direction.

In one embodiment, each of the first recessed portions and the second recessed portions may be C-shaped.

The invention further provides an electronic device including a first body, a second body, and a supporting module. The supporting module is disposed between the first body and the second body, and the supporting module includes a guide rail, a sliding element, an elastic element, and a supporting unit. The guide rail is fastened to the first body and has a first side wall and a second side wall facing each other. The first side wall has a plurality of first recessed portions, and the second side wall has a plurality of second recessed portions in a one-to-one correspondence with the first recessed portions. Each of the first recessed portions and the corresponding second recessed portion are recessed in opposite directions to allow the guide rail to have different width along a first direction. The sliding element is slidably disposed at the guide rail along the first direction. The elastic element is disposed at the sliding element and is positioned between the first side wall and the second side wall of the guide rail. Two ends of the supporting unit are rotatably disposed at the sliding element and the second body around a second direction vertical with the first direction. When the first body and the second body approaches or are far away from each other along the guide rail, the supporting unit rotates relative to the first body and the second body around the second direction, the sliding element slides in the guide rail along the first direction, and the elastic element is positioned between one of the first recessed portions and the corresponding second recessed portion, thus positioning the first body and the second body.

In one embodiment, the elastic element may be an elastic sheet.

In one embodiment, the supporting unit may include a supporting rod, a first shaft, and a second shaft. The first shaft may be disposed at one end of the supporting rod and may be rotatably disposed at the sliding element around the second direction. The second shaft may be disposed at the other end of the supporting rod and may be rotatably disposed at the second body around the second direction.

In one embodiment, the two ends of the supporting rod may have a thread portion, respectively.

In one embodiment, the supporting module may further include a base fastened to the second body. The supporting unit may be rotatably disposed at the base around the second direction.

In one embodiment, each of the first recessed portions and the second recessed portions may be C-shaped.

In one embodiment, the electronic device may be a wall-sticker-type speaker.

According to the supporting module and the electronic device using the same in the invention, the first body and the second body can approach or be far away from each other via the cooperation of the sliding of the sliding element in the guide rail and the rotation of the supporting unit relative to the first body and the second body. Further, the sliding element can be positioned at different places of the guide rail via the cooperation of the elastic element and the first recessed portion and the second recessed portion of the guide rail, thus allowing the first body and the second body to be positioned at different angles. The supporting module according to the invention is simple in structure and easy to operate, and manufacture cost is low and generality is better as well. Further, due to the supporting unit, the supporting module according to the invention can avoid quivering at the location away from the axle centre when the object is opened to a certain angle.

These and other features, aspects, and advantages of the present invention will become better understood with regard to the following description, appended claims, and accompanying drawings.

### BRIEF DESCRIPTION OF THE DRAWINGS

FIG. 1 is a schematic diagram of an electronic device according to one preferred embodiment of the invention;

FIG. 2 is an exploded diagram of an elastic element, a sliding element, and a supporting unit of a supporting module according to one preferred embodiment of the invention;

FIG. 3 is an assembly diagram of a sliding element and a guide rail of a supporting module according to one preferred embodiment of the invention; and

FIG. 4A and FIG. 4B are schematic diagrams showing different angles between a first body and a second body of an electronic device according to one preferred embodiment of the invention.

### DETAILED DESCRIPTION OF THE INVENTION

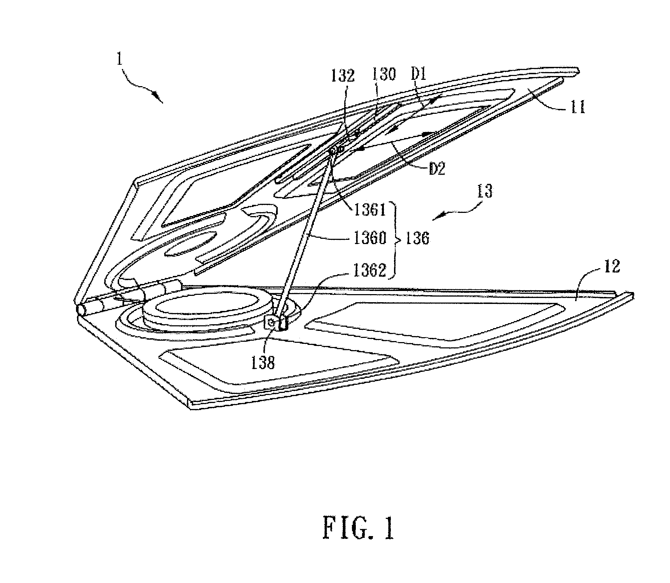

FIG. 1 is a schematic diagram of an electronic device according to one preferred embodiment of the invention. In FIG. 1, an electronic device 1 according to the embodiment includes a first body 11, a second body 12, and a supporting module 13. The electronic device 1 may be a wall-sticker-type speaker. For example, the second body 12 can be fastened at the wall, and the first body 11 can approach or be far away from the second body 12. When the first body 11 and the second body 12 approach or are far way from each other, the volume of the electronic device 1 can be simultaneously controlled. However, the invention is not limited thereto. In practice, the electronic device 1 can be other type of electronic device (such as a notebook computer).

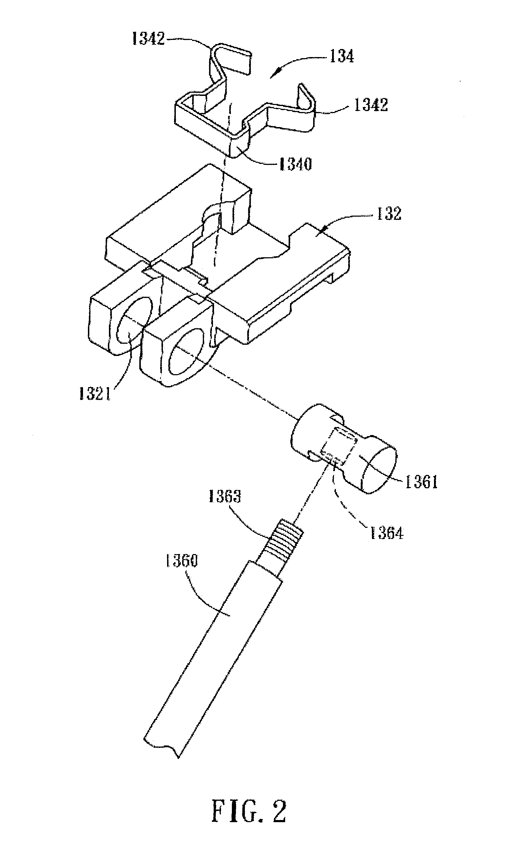

In the embodiment, in FIG. 1, the supporting module 13 is disposed between the first body 11 and the second body 12. The supporting module 13 includes a guide rail 130, a sliding element 132, an elastic element 134 (shown in FIG 2), a supporting unit 136, and a base 138. The guide rail 130 is fastened to the first body 11. The sliding element 132 is slidably disposed at the guide rail 130 along the first direction D1. The elastic element 134 is disposed at the sliding element 132. The base 138 is fastened to the second body 12. Two ends of the supporting unit 136 are rotatably disposed at the sliding element 132 and the base 138 around a second direction D2. The second direction D2 is vertical with the first direction D1.

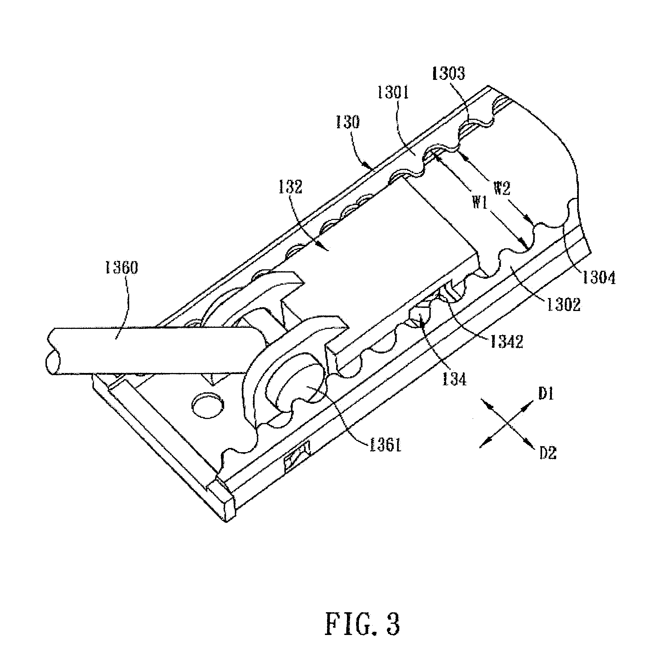

FIG. 2 is an exploded diagram of an elastic element 134, a sliding element 132, and a supporting unit 136 of a supporting module 13 according to one preferred embodiment of the invention. FIG. 3 is an assembly diagram of a sliding element 132 and a guide rail 130 of a supporting module 13 according to one preferred embodiment of the invention. Please refer to FIG. 1 through FIG. 3. The detailed structure of the supporting module 13 may be described hereinbelow.

In the embodiment, in FIG. 3, the guide rail 130 has a first side wall 1301 and a second side wall 1302 facing each other. The first side wall 1301 has a plurality of first recessed portions 1303, and the second side wall 1302 has a plurality of second recessed portions 1304 in a one-to-one correspondence with the first recessed portions 1303. Each of the first recessed portions 1303 and the corresponding second recessed portion 1304 are recessed in opposite directions to allow the guide rail 130 to have different width along the first direction D1. In the embodiment, since the first recessed portions 1303 are in a one-to-one correspondence with the second recessed portions 1304, and all of the first recessed portions 1303 are recessed in the same direction and all of the second recessed portions 1304 are recessed in the same direction as well, the edges of the first side wall 1301 and the second side wall 1302 are wave-shaped, respectively. However, the invention is not limited thereto. In other embodiments, the first recessed portions 1303 can be recessed in different directions, and the second recessed portions 1304 can also be recessed in different directions as well.

In the embodiment, the first recessed portion 1303 and the second recessed portion 1304 have the same shape and dimension. The first recessed portion 1303 and the second recessed portion 1304 are C-shaped, respectively. However, the invention is not limited thereto. In practice, the first recessed portion 1303 and the second recessed portion 1304 can have other shape (such as V-shaped or U-shaped) or dimension.

In the embodiment, the guide rail 130 has different width along the first direction D1. In detail, in FIG. 3, the maximum distance between the first recessed portion 1303 and the corresponding second recessed portion 1304 is W1, and the normal distance between the first side wall 1301 and the second side wall 1302 (i.e. the distance between the first side wall 1301 and the second side wall 1302 when the first recessed portion 1303 and the second recessed portion 1304 are not disposed) is W2. Therefore, the width of the guide rail 130 along the first direction D1 is between W1 and W2. However, the invention is not limited thereto.

In the embodiment, in FIG 2, the elastic element 134 is disposed at the sliding element 132. The elastic element 134 may be an elastic sheet and it has a body 1340 and two elastic portions 1342 facing each other. The body 1340 of the elastic element 134 is U-shaped and positioned in the inside of the sliding element 132. The two elastic portions 1342 are U-shaped, respectively, and they protrude from the side walls of the sliding element 132 and are positioned against the first side wall 1301 and the second side wall 1302, respectively. However, the type and the shape of the elastic element 134 in the invention are not limited. In other embodiments, the elastic element 134 can also be a spring.

In the embodiment, the sliding element 132 can be positioned in the guide rail 130 via the cooperation of the elastic element 134 and the first recessed portion 1303 and the second recessed portion 1304 of the guide rail 130. In detail, when the two elastic portions 1342 of the elastic element 134 are positioned against the first recessed portion 1303 and the corresponding second recessed portion 1304, respectively, the elastic element 134 is in a released state. The elastic element 134 can be positioned between the first recessed portion 1303 and the second recessed portion 1304 via the elastic force of the elastic element 134, thus allowing the sliding element 132 to be positioned at the guide rail 130.

In the embodiment, the sliding element 132 can be positioned at the guide rail 130 via the elastic force of the elastic element 134, and therefore the elastic force of the elastic element 134 needs to be overcome when the first body 11 and the second body 12 approach or are far away from each other. In detail, when an external force exerts upon the first body 11 (or the second body 12) to allow the first body 11 (or the second body 12) to approach or be far away from the second body 12 (or the first body 11), the supporting unit 136 generates an reacting force to drive the sliding element 132 and the elastic element 134 to slide together. When the external force is removed, the elastic element 134 stops sliding and is positioned in one of the first recessed portions 1303 and the corresponding second recessed portion 1304. At this time, the elastic element 134 is in a released state, thus allowing the sliding element 132 to be positioned at the guide rail 130.

In the embodiment, in FIG. 1, the supporting unit 136 includes a supporting rod 1360, a first shaft 1361, and a second shaft 1362. The first shaft 1361 is disposed at one end of the supporting rod 1360 and is rotatably disposed at the sliding element 132 around the second direction D2. The second shaft 1362 is disposed at the other end of the supporting rod 1360 and is rotatably disposed at the base 138 around the second direction D2.

In detail, in the embodiment, the two ends of the supporting rod 1360 have a thread portion 1363, respectively. The first shaft 1361 and the second shaft 1362 have a threaded hole 1364, respectively. The two ends of the supporting rod 1360 are fastened in the threaded holes 1364 of the first shaft 1361 and the second shaft 1362, respectively. That is, the two ends of the supporting rod 1360 are screwed at the first shaft 1361 and the second shaft 1362, respectively. However, how the supporting rod 1360 is fastened to the first shaft 1361 and the second shaft 1362 is not limited in the invention. In other embodiments, the supporting rod 1360 can be fastened at the first shaft 1361 and the second shaft 1362 via other methods (such as hooking or adhering), or the supporting rod 1360, the first shaft 1361, and the second shaft 1362 can be integrally formed.

In the embodiment, in FIG. 2, the sliding element 132 has two through holes 1321. The first shaft 1361 passes through the through hole 1321 and is capable of rotating relative to the sliding element 132 around the second direction D2, and therefore the supporting unit 136 can rotate relative to the first body 11 around the second direction D2. Further, in the embodiment, the relationship between the second shaft 1362 and the base 138 is the same with that between the first shaft 1361 and the sliding element 132, and it is not described for concise purpose. Therefore, the supporting unit 136 is capable of rotating relative to the second body 12 around the second direction D2. However, the invention is not limited thereto. In other embodiments, the base 138 is not disposed, and the second shaft 1362 can be directly rotatably disposed at the second body 12 around the second directionD2.

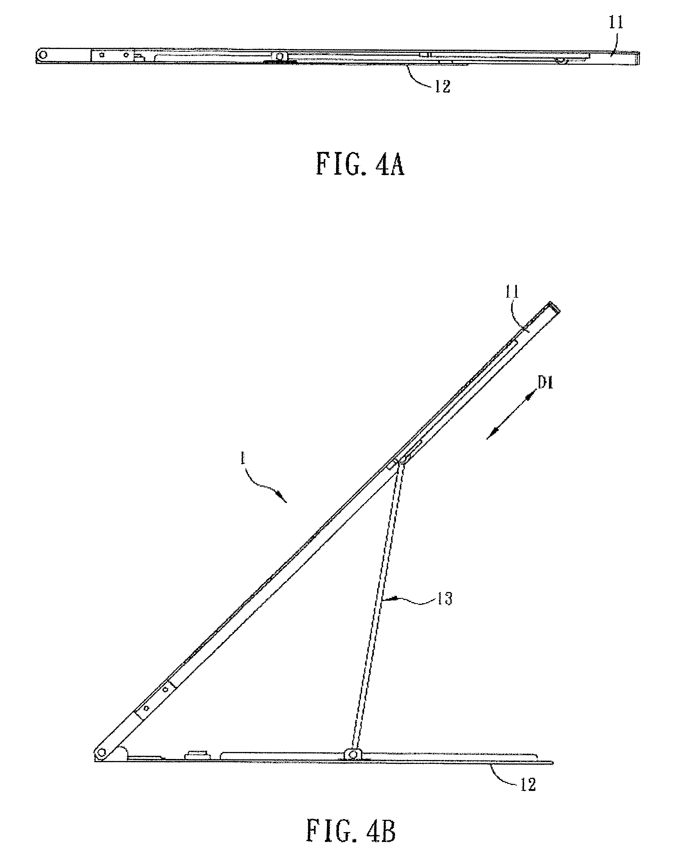

FIG. 4A and FIG. 4B are schematic diagrams showing different angles between a first body 11 and a second body 12 of an electronic device 1 according to one preferred embodiment of the invention. Please refer to FIG. 1, FIG. 3, FIG. 4A, and FIG. 4B.

In the embodiment, when the first body 11 and the second body 12 of the electronic device 1 approach or are far away from each other, the supporting unit 136 rotates relative to the first body 11 and the second body 12 around the second direction D2, the sliding element 132 slides in the guide rail 130 along the first direction D1, and the elastic element 134 is positioned between the first recessed portion 1303 and the corresponding second recessed portion 1304, thus positioning the first body 11 and the second body 12.

In the embodiment, the first body 11 and the second body 12 of the electronic device I form an angle between 0 and 45 degrees. In FIG 4A, the angle formed by the first body 11 and the second body 12 is 0 degree. That is, the first body 11 covers the second body 12. At this time, the sliding element 132 can slide to one end of the guide rail 130. In FIG. 4B, the angle formed by the first body 11 and the second body 12 is 45 degrees. At this time, the sliding element 132 can slide to the other end of the guide rail 130. However, the invention is not limited thereto. In practice, the length of the guide rail 130 and the supporting rod 1360 can be disposed as needed, thus obtaining different angles between the first body 11 and the second body 12.

To sum up, according to the supporting module and the electronic device using the same in the embodiment of the invention, the first body and the second body can approach or be far away from each other via the cooperation of the sliding of the sliding element in the guide rail and the rotation of the supporting unit relative to the first body and the second body. Further, the sliding element can be positioned at different places of the guide rail via the cooperation of the elastic element and the first recessed portion and the second recessed portion of the guide rail, thus allowing the first body and the second body to be positioned at different angles. The supporting module according to the embodiment of the invention is simple in structure and easy to operate, and manufacture cost is low and generality is better as well. Further, due to the supporting unit, the supporting module according to the embodiment of the invention can avoid quivering at the location away from the axle centre when the object is opened to a certain angle.

Although the present invention has been described in considerable detail with reference to certain preferred embodiments thereof, the disclosure is not for limiting the scope of the invention. Persons having ordinary skill in the art may make various modifications and changes without departing from the scope and spirit of the invention. Therefore, the scope of the appended claims should not be limited to the description of the preferred embodiments described above.

## Claims

1. A supporting module (13) disposed between a first body (11) and a second body (12), the supporting module comprising:
a guide rail (130) fastened to the first body and having a first side wall (1301) and a second side wall (1302) facing each other, the first side wall having a plurality of first recessed portions (1303), the second side wall having a plurality of second recessed portion (1304) in a one-to-one correspondence with the first recessed portions, each of the first recessed portions and the corresponding second recessed portion being recessed in opposite directions to allow the guide rail to have different width along a first direction;
a sliding element slidably (132) disposed at the guide rail along the first direction;
an elastic element (134) disposed at the sliding element and positioned between the first side wall and the second side wall of the guide rail; and
a supporting unit (136), two ends of the supporting unit being rotatably disposed at the sliding element and the second body around a second direction vertical with the first direction, respectively,
wherein when the first body and the second body approach or are far away from each other along the guide rail, the supporting unit rotates relative to the first body and the second body around the second direction, the sliding element slides in the guide rail along the first direction, and the elastic element is positioned between one of the first recessed portions and the corresponding second recessed portion, thus positioning the first body and the second body.

2. The supporting module according to claim 1, wherein the elastic element is an elastic sheet.

3. The supporting module according to claim 1 or 2, wherein the supporting unit comprises a supporting rod (1306), a first shaft (1361), and a second shaft (1362), the first shaft is disposed at one end of the supporting rod and is rotatably disposed at the sliding element around the second direction, and the second shaft is disposed at the other end of the supporting rod and is rotatably disposed at the second body around the second direction.

4. The supporting module according to claim 3, wherein the two ends of the supporting rod have a thread portion (1363), respectively.

5. The supporting module according to one or more of the claims 1 to 4, wherein the supporting module further comprises a base fastened to the second body, and the supporting unit is rotatably disposed at the base around the second direction.

6. The supporting module according to one or more of the claims 1 to 5, wherein each of the first recessed portions and the second recessed portions is C-shaped.

7. An electronic device (1) comprising:
a first body (11);
a second body (12); and
a supporting module (13) disposed between the first body (11) and the second body (12), the supporting module including:
a guide rail (130) fastened to the first body and having a first side wall (1301) and a second side wall (1302) facing each other, the first side wall having a plurality of first recessed portions (1303), the second side wall having a plurality of second recessed portion (1304) in a one-to-one correspondence with the first recessed portions, each of the first recessed portions and the corresponding second recessed portion being recessed in opposite directions to allow the guide rail to have different width along a first direction;
a sliding element slidably (132) disposed at the guide rail along the first direction;
an elastic element (134) disposed at the sliding element and positioned between the first side wall and the second side wall of the guide rail; and
a supporting unit (136), two ends of the supporting unit being rotatably disposed at the sliding element and the second body around a second direction vertical with the first direction, respectively,
wherein when the first body and the second body approach or are far away from each other along the guide rail, the supporting unit rotates relative to the first body and the second body around the second direction, the sliding element slides in the guide rail along the first direction, and the elastic element is positioned between one of the first recessed portions and the corresponding second recessed portion, thus positioning the first body and the second body.

8. The electronic device according to claim 7, wherein the elastic element is an elastic sheet.

9. The electronic device according to claim 7 or 8, wherein the supporting unit comprises a supporting rod (1306), a first shaft (1361), and a second shaft (1362), the first shaft is disposed at one end of the supporting rod and is rotatably disposed at the sliding element around the second direction, and the second shaft is disposed at the other end of the supporting rod and is rotatably disposed at the second body around the second direction.

10. The electronic device according to claim 9, wherein the two ends of the supporting rod have a thread portion (1363), respectively.

11. The electronic device according to one or more of the claims 7 to 10, wherein the supporting module further comprises a base fastened to the second body, and the supporting unit is rotatably disposed at the base around the second direction.

12. The electronic device according to one or more of the claims 7 to 11, wherein each of the first recessed portions and the second recessed portions is C-shaped.

13. The electronic device according to one or more of the claims 7 to 12, wherein the electronic device is a wall-sticker-type speaker.
